# EUROPEAN PATENT APPLICATION

(11) **EP 2 106 072 A1**
(43) Date of publication of application: **30.09.2009**
(21) Application number: 08715280.7
(22) Date of filing: 20.03.2008
(51) Int. Cl.: H04L 12/56

(54) **A METHOD, DEVICE AND SYSTEM FOR ROUTING**

(30) Priority: 15.08.2007 CN 200710120314
(71) Applicant: Huawei Technologies Co., Ltd., Longgang District, Shenzhen Guangdong 518129 (CN)
(72) Inventor: DENG, Qingfeng, Shenzhen, Guangdong 518129 (CN)
(74) Representative: Thun, Clemens
(86) International application number: PCT/CN2008/070544
(87) International publication number: WO 2009/021412

(57) **Abstract**

A method for routing, includes: accessing call and sending call information to a intelligent call routing device, receiving routing information returned from the intelligent call routing device, the routing information being obtained by the intelligent call routing device according to a presetting routing script corresponding with the call information, according to the said routing information, routing the call to an objective device. And a device and system for routing.

## Description

This application claims priority to Chinese Patent Application No. 200710120314.5, entitled "Intelligence call routing method, device and system" and filed with the Chinese Patent Office on August 15, 2007, which is hereby incorporated by reference in its entirety.

### Field of the Invention

The present invention relates to call routing technologies and in particular to a routing method, device and system.

### Background of the Invention

With the rapid development of communication network technologies, the government, enterprises and the public have increasingly personalized demands for communication services. In addition to demands for voice communication, Demands for data services of contents, applications, etc., are rapidly increasing. Development of data and Internet as well as their integration with fixed and mobile communication manners make it possible for telecommunication basic operators to satisfy personalized service demands of users.

Most of current routing functions are accomplished by a core server of a call center. The core server allocates calls to respective destination devices in accordance with system configurations, and then the destination devices process the calls.

The defect of the above prior art lies in that, since routing of a call is "hardened" in advance in the call center server, codes of the core server have to be modified if a service provider extends its information or conducts a special process of the call. Furthermore, the core server has to be modified if a special and complex process (e.g., a database access operation) is required for routing of a call, which may seriously degrade the performance and reduce customers' satisfaction.

### Summary of the Invention

Embodiments of the invention provides a routing method, device and system which can improve flexibility of a routing policy, shorten a cycle to develop a complex routing function, and reduce development cost.

An embodiment of the invention provides a routing method including:
enabling an access of a call and sending information of the call to an intelligence call routing device;
receiving routing information, which is obtained by the intelligence call routing device in accordance with a pre-configured routing script corresponding to the information of the call, returned from the intelligence call routing device; and
routing the call to a destination device in accordance with the routing information.

An embodiment of the invention provides a routing method including:
receiving information of a call, which is obtained by a core server from an analysis of an access code of the call, sent from the core server;
obtaining routing information in accordance with a configured routing script corresponding to the information of the call; and
sending the routing information to the core server.

An embodiment of the invention provides a routing method including:
enabling, by a core server, an access of a call and sending information of the call to an intelligence call routing device;
obtaining, by the intelligence call routing device, routing information in accordance with a configured routing script corresponding to the information of the call;
returning, by the intelligence call routing device, the routing information to the core server; and
routing, by the core server, the call to a destination device in accordance with the routing information.

An embodiment of the invention provides a routing device including:
a first unit adapted to interact with a core server of a call center; and
a second unit adapted to obtain routing information in accordance with information of a call received by the first unit and to send the routing information to the core server through the first unit.

An embodiment of the invention provides a core server including:
an access unit adapted to enable an access of a call;
a sending unit adapted to send information of the call to an intelligence call routing device;
a reception unit adapted to receive routing information, which is obtained by the intelligence call routing device in accordance with a pre-configured routing script corresponding to the information of the call, returned from the intelligence call routing device; and
a routing unit adapted to route the call to a destination device in accordance with the routing information.

An embodiment of the invention provides a routing system including a core server and at least one intelligence call routing device, wherein the core server is adapted to enable an access of a call, to send information of the call to the intelligence call routing device, and to route the call to a destination device in accordance with routing information returned from the intelligence call routing device; and the at least one intelligence call routing device is adapted to obtain the routing information in accordance with a routing script corresponding to the information of the call and to send the routing information to the core server.

An embodiment of the invention provides a network device including:
a component adapted to configure an intelligence call routing script corresponding to an access code;
a component adapted to configure a corresponding relationship between an intelligence call routing device and the intelligence call routing script; and
a component adapted to configure a core server with whether intelligence routing is required for the access code.

The above technical solutions address inflexible routing due to hardening of a routing function in the core server and provide the following advantageous effects as compared with routing by the traditional call center. A routing policy of the call center system can be made more flexible. For example, a service provider can enable routing with use of a system configuration routing algorithm provided by an operator. Alternatively, the service provider can enable routing with use of its own algorithm in a customized intelligence call routing script dependent upon the practical condition. The cycle to develop a complex routing function can be shortened, and the development cost can be lowered. With the methods according to the embodiments of the invention, a complex routing algorithm can be accomplished simply by adding or modifying a service logic of the intelligence call routing script without modifying any routing algorithm of the core server of the operator. Thus, most of routing demands can be satisfied through modification at the service layer, and the intelligence call routing script can be put into use immediately after being validated. The competitiveness of the routing function of the operator can therefore be enhanced.

### Brief Description of the Drawings

Figure 1 is a schematic flow chart illustrating a routing method according to an embodiment of the invention;

Figure 2 is a schematic flow chart illustrating a routing method according to another embodiment of the invention;

Figure 3 is a schematic structural diagram illustrating a routing system according to an embodiment of the invention;

Figure 4 is a schematic structural diagram illustrating a routing device according to an embodiment of the invention; and

Figure 5 is a schematic structural diagram illustrating a core server according to an embodiment of the invention.

### Detailed Description of the Invention

The technical solutions of the embodiments of the invention will be further described in details below with reference to the drawings and the embodiments.

Taking a routing system and method for a call center as an example, an embodiment of the invention separates a routing function from a core server of the call center to form an independent service layer which is converted into service instructions understandable by the core server by means of relevant functions of the core server. This technology provides a method for more flexible and rapid customization of the routing function of the call center. By means of routing with this method, more diversified routing control customization can be provided for a user, and a special demand of the user can be responded to and satisfied more rapidly.

The embodiment of the invention will not be limited to a certain network but will be applicable to a fixed network, a mobile GSM network, a mobile CDMA network, a mobile 3G network (including WCDMA, CDMA2000, TD-SCDMA), a handy phone network, a Next Generation Network (NGN), etc.

It is also appreciated for those skilled in the art that the method according to the embodiment of the invention can be applicable not only to a call center but also to any other scenario where routing of a call is required. Furthermore, the above call refers to a request that a user sends to any device (e.g., a server, a computer, etc.), such as a phone call, an email request, a multimedia request, etc.

An embodiment of the invention provides a routing method in which a dynamically and flexibly configurable intelligence call routing device searches for a route for a call by selecting the corresponding route in response to service demand of the call. Taking an application of the routing method in a call center as an example, a specific flow is as follows. When a user initiates a call and the call is switched from the call center to a core server, the core server of the call center analyzes the number of the call, and sends, in accordance with routing configuration, a routing process request together with relevant information of the call to the intelligence call routing device. The intelligence call routing device, in accordance with a configured routing script, finds and executes a designated intelligence routing flow, and returns result information of the intelligence routing flow to the core server. The core server routes the call to a destination device in accordance with the result information.

In order to provide the intelligence call routing device with the intelligence routing flow, an operation procedure of the intelligence routing flow can be generated by editing and compiling the routing script, and thus the intelligence call routing device can be configured with various desired intelligence routing flows. The intelligence routing flow can be configured by the following operations.

The intelligence routing flow is loaded for the intelligence call routing device.

The intelligence call routing device reads logic information in the intelligence routing flow after the intelligence routing flow is successfully loaded for the intelligence call routing device.

The above embodiment addresses inflexibility of a service due to hardening of outgoing call service into a background server, and provides the following advantageous effects as compared with traditional outgoing call service. A system routing policy can be made more flexible. For example, a service provider can enable routing with use of a system configuration routing algorithm provided by an operator. Alternatively, the service provider can enable routing with use of its own algorithm in a customized intelligence call routing script dependent upon its practical condition. The cycle to develop a complex routing function can be shortened, and the development cost can be lowered. With the method according to the embodiment of the invention, a complex routing algorithm can arise simply by adding or modifying a service logic of the intelligence call routing script without modifying any routing algorithm of the core server of the operator, so that most of routing demands can be satisfied through modification at the service layer, and the intelligence call routing script can be put into use immediately after being validated. The competitiveness of the routing function of the operator can be enhanced.

The operator provides respective service providers with its networks. After a user gains an access to the system, the operator transfers call control to the service providers. Thus, various specific services can be provided in the above technical solution with use of networks of more service providers. The intelligence call routing device is a means provided by the operator for the service providers to manage service routing of the service providers. The service providers can develop routing functions adapted to their own services in an Integrated Development Environment (IDE) of an intelligence call routing script, so as to provide their own specific service functions.

In the above embodiment, the core server of the call center or the intelligence call routing device can select the routing script. Alternatively, a corresponding configuration function component can configure the routing script of the intelligence call routing device. Still alternatively, the routing script of the intelligence call routing device can be configured in an integrated development environment of an intelligence call routing script. Further alternatively, capabilities of the intelligence call routing device can be extended dependent upon a service demand.

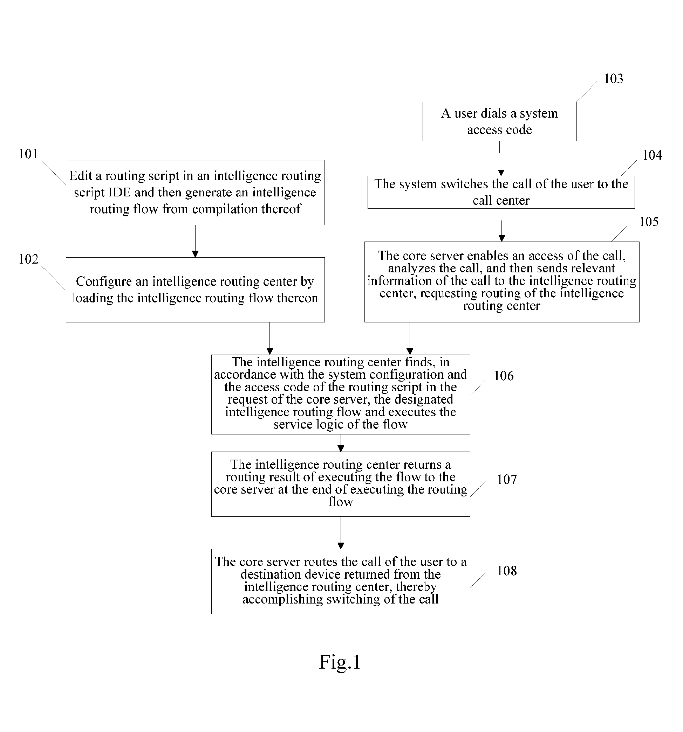

As illustrated in Figure 1, taking a call routing method in a call center as an example, a call routing processing method according to an embodiment of the invention includes the following steps.

101. An intelligence call routing script is edited in an intelligence routing script IDE and then an intelligence routing flow is generated from compilation thereof.

Specifically, a service provider or an operator develops and edits the intelligence call routing script with use of a routing script editing device provided in the system. The script includes corresponding calculation operations, database operations, an operation of querying a core server about the status of a device, etc. At the end of the editing flow, the service provider or the operator compiles the script with use of the routing script editing device to generate a file of the intelligence routing flow, which is loadable and executable on an intelligence call routing device.

102. An intelligence routing center is configured by loading the intelligence routing flow thereon.

Specifically, the intelligence call routing center of the system can be configured via a configuration station of the system. One or more intelligence call routing devices can be configured, and the set of the one or more intelligence call routing devices can be referred to as the intelligence routing center in this embodiment. The configuration operations include configuring intelligence call routing scripts corresponding to respective access codes and configuring corresponding relationships between the respective intelligence call routing devices and the intelligence call routing scripts, that is, configuring which intelligence call routing scripts are to be loaded for the respective intelligence call routing devices.

Additionally, the configuration station further configures the core server, for example, regarding whether intelligence routing is required for an access code. With such configuration, the core server upon reception of a call can send a route request to an intelligence call routing device for routing if intelligence routing is required as indicated in an access code of the call.

With the above configurations, the routing system is capable of intelligence routing. Hereinafter, an intelligence routing process will be described taking a routing process of an incoming call of a user as an example.

103. A user gains an access to the system by dialing a system access code.

104. The system switches the call of the user to the call center.

For example, the call can be processed by an operation system which switches the call to the core server of the call center for processing.

105. The core server of the call center enables an access of the call, analyzes the call, and then sends relevant information of the call, such as information on the calling and called users (i.e., the user information and the access code) and information on statuses and usage conditions of respective devices in the system (e.g., the call center), to the intelligence routing center, requesting routing of the intelligence routing center.

For example, the core server discovers that the call should be routed by an intelligence call routing device of the intelligence routing center in accordance with the above configurations, and then requests routing of the intelligence call routing device. This request can carry the relevant information of the call. Alternatively, the relevant information of the call can be sent separately to the intelligence call routing device.

106∼107. The intelligence routing center finds, in accordance with the system configuration and the access code of the routing script in the request of the core server, and executes the designated intelligence routing flow (and a service logic included therein) and then returns a routing execution result to the core server at the end of executing the intelligence routing flow.

Specifically, the intelligence routing center (including the intelligence call routing device) finds, in accordance with parameters of the request (e.g., intelligence routing-related parameters) and relevant information, the corresponding intelligence routing flow already loaded with success upon reception of the routing request of the core server executes the service logic of the intelligence routing flow, which includes operations of querying about the statuses of the devices, calculations, querying the database, etc., and then returns the routing result of the setting in the intelligence routing flow to the core server at the end of executing the flow.

108. The core server routes the call of the user to a destination device returned from the intelligence routing center, thereby accomplishing switching of the call.

Specifically, the core server receives the routing result of the intelligence call routing device and switches the current call to the destination devices indicated by the intelligence call routing device, thereby accomplishing switching of the call.

It shall be noted that the above operations of configuring the intelligence call routing devices, generating the file of the intelligence routing flow which is loadable and executable on the intelligence call routing device, etc., can also be executed at any time than after the user initiates the access call. That is, configuring and compiling of the intelligence routing scripts can be separated from the use thereof for routing. However, currently configured intelligence routing at the incoming time of the call will determine the routing destination.

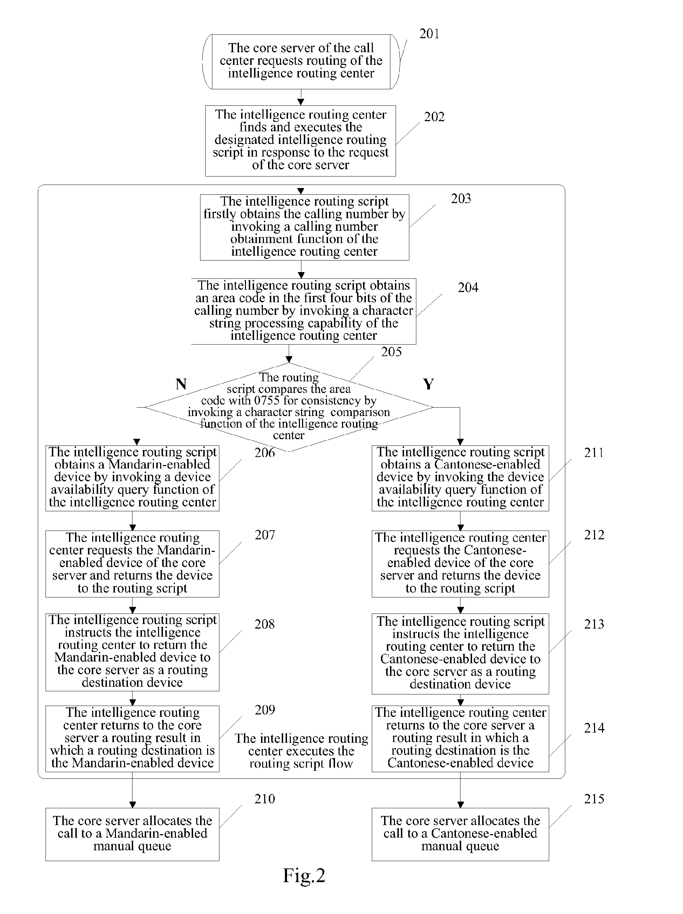

As illustrated in Figure 2, a call routing processing method according to another embodiment of the invention takes a specific routing script as an example in which a calling number is analyzed so that terminal users at different zones dial for an access to different services. Specifically:

Descriptions of a demand: fixed phone users at different zones dial an access code of "5555" for an access to manual services of different functions of the same service provider. In particular, a user at Guangdong province dials the access code for an access to a Cantonese-enabled voice manual service, and a user at another province dials the access code for an access to a Mandarin-enabled voice manual service.

Descriptions of an implementation: an intelligence call routing script is written in which the flow firstly searches, accordance with the number of the user, in a database for a province to which the calling number belongs in, and goes to the Cantonese-enabled voice manual service if the calling number is a number of Guangdong province, or otherwise goes to the Mandarin-enabled voice manual service. The processing in the intelligence call routing device is as illustrated in Figure 2 in which the functions of the intelligence routing center can be accomplished by the intelligence call routing device as mentioned above and generally includes the following steps.

201. The core server of the call center requests routing of the intelligence routing center.

202. The intelligence routing center finds and executes the designated intelligence routing script in response to the request of the core server.

203. The intelligence routing script firstly obtains the calling number by invoking a calling number obtainment function of the intelligence routing center.

204. The intelligence routing script obtains an area code in the first four bits of the calling number by invoking a character string processing capability of the intelligence routing center.

205. The intelligence routing script compares the area code with 0755 for consistency by invoking a character string comparison function of the intelligence routing center, and executes the step 206 if the area code is not 0755 or otherwise executes the step 211.

206. The intelligence routing script obtains a Mandarin-enabled device by invoking a device availability query function of the intelligence routing center.

207. The intelligence routing center requests the Mandarin-enabled device of the core server and returns the device to the intelligence routing script.

208. The intelligence routing script instructs the intelligence routing center to return the Mandarin-enabled device to the core server as a routing destination device.

209. The intelligence routing center returns to the core server a routing result in which a routing destination is the Mandarin-enabled device.

210. The core server allocates the call to a Mandarin-enabled manual queue.

211. The intelligence routing script obtains a Cantonese-enabled device by invoking the device availability query function of the intelligence routing center.

212. The intelligence routing center requests the Cantonese-enabled device of the core server and returns the device to the routing script.

213. The intelligence routing script instructs the intelligence routing center to return the Cantonese-enabled device to the core server as a routing destination device.

214. The intelligence routing center returns to the core server a routing result in which a routing destination is the Cantonese-enabled device.

215. The core server allocates the call to a Cantonese-enabled manual queue.

The above steps 203 to 209 and 211 to 214 indicate a processing logic in which an intelligence call routing device selects a call processing device which varies with a calling number. The processing of the intelligence call routing device may vary with a user edited routing script. The intelligence call routing device can extend its support capabilities as required for a service script, including querying about a status of a device, a mathematic operation, a character string operation, a database operation, dynamic database invoking, reading a configuration file, etc.

The above embodiment of the invention can address the problem that services provided by different service providers shall provide manual services for users of different languages. For example, the user dials through a fixed phone for an access to a manual system. The system automatically determines an area code of the phone of the user, and serves him by a manual service representative with the skill of Cantonese if the area code of the fixed phone is 0755 (the area code of Shenzhen, Guangdong Province) or by a Mandarin service otherwise.

Furthermore, those ordinarily skilled in the art shall appreciate that all or part of the steps in the call routing processing method according to the embodiments of the invention can be implemented by a program instructing relevant hardware, which can be stored in a computer readable storage medium such as a read-only memory (ROM), a random access memory (RAM), a magnetic disk and an optical disk.

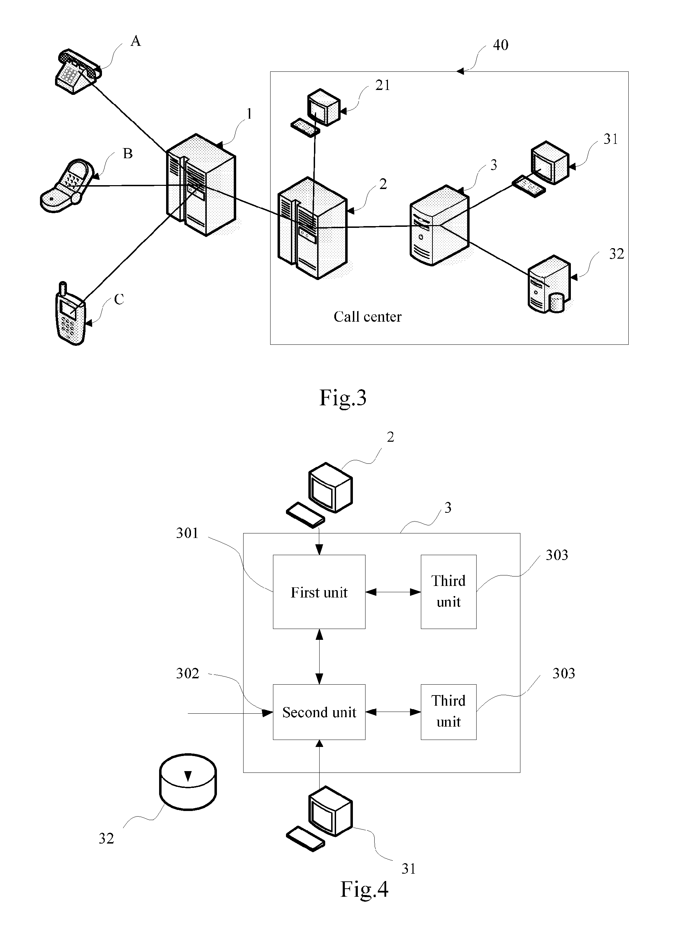

Referring to Figure 3, it is a schematic structural diagram illustrating a routing system according to an embodiment of the invention, taking a call center as an example.
The routing system includes the following components.

An operation system 1 is a call access system throughout the call center, and is adapted to enable an access of a call initiated from various terminals (e.g., terminals A, B and C illustrated in Figure 3), to analyze a called number, and to submit the call to a core server 2 of the call center.

The core server 2 is adapted to manage devices in the call center, for example, to provide an intelligence call routing device 3 with status information of the devices; and to switch a call, that is, to allocate the call to a corresponding device in a call center 40. When the system configures the intelligence call routing device 3, the core server requests of the intelligence call routing device 3 routing of the call in accordance with information on the called number in the current access call, and switches the call to the corresponding device in accordance with a routing result of the intelligence call routing device 3.

The intelligence routing device 3 is adapted to receive the relevant information of the call, which is sent from the core server, to execute, in accordance with the relevant information of the call (e.g., user information, an access code, information on statuses and usage conditions of the devices of the call center, etc.) and the setting of the system, an intelligence call routing script to find and execute a designated intelligence routing flow, and to send result information (i.e., a routing result) of executing the intelligence routing flow to the core server. A configuration device 21, e.g., the configuration station mentioned above in the embodiment illustrated in Figure 1, is adapted to configure the devices in the call center (e.g., the core server 2 and the intelligence routing device 3) with basic configuration through the core server 2. For example, the basic information includes which devices are included in the access center, intelligence call routing devices corresponding to system access codes, whether intelligence routing is required for a system access code, which intelligence routing flow is required to be loaded for the intelligence routing device 3, etc.

Further in another embodiment, one or more above intelligence routing devices 3 (collectively referred to as an intelligence routing center) can be set in the call center. Furthermore, one or more database servers 32 can be arranged which can customize and store routing information including user related information required for the intelligence routing devices 3 in accordance with an intelligence routing script. The database server 32 is connected with the intelligence call routing device 3. This embodiment can make a routing policy more flexible, shorten the cycle to develop a complex routing function and reduce the development cost.

In another embodiment, one or more intelligence call routing script input devices 31 can be additionally arranged to input routing script information or a routing script file. The intelligence call routing script input device 31 primarily provides a development environment of an intelligence routing service script. The developed script after being compiled can be executed in the intelligence call routing device 3. The intelligence call routing script input device 31 can be connected with the intelligence call routing device 3 and is adapted to receive an intelligence call routing script which is input via the input device and to send the script to the intelligence call routing device 3. The intelligence call routing device 3 primarily queries the core server 2 about statuses and usage conditions of the respective devices, executes a user edited intelligence routing script, and then returns a routing result to the core server 2.

Referring to Figure 4, a routing device according to an embodiment of the invention includes the following components.

The routing device includes a first unit 301 adapted to interact with the core server 2 of the core center.

A second unit 302 is adapted to obtain routing information from call related information received by the first unit 301, to obtain information on statuses and usage conditions of the devices in the call center queried about by the core server through the first unit 301, to execute an intelligence call routing script and find and execute a designated intelligence routing flow, and to send a result (i.e., a routing result) of executing the intelligence routing flow to the core server 2 through the first unit 301.

In another embodiment, the second unit 302 can include the following components.

A component is adapted to generate the intelligence routing flow by compiling the routing script.

A component is adapted to load the intelligence routing flow.

A component is adapted to execute the intelligence routing flow to obtain the routing information.

In another embodiment, one or more database servers 32 can be additionally arranged to store necessary routing information, and the database server 32 is connected with the second unit 302 of the intelligence call routing device 3.

In another embodiment, one or more intelligence call routing script input devices 31 can be additionally arranged to input routing script information or file. The intelligence call routing script input device 31 can be connected with the second unit 302 through the first unit 301 or directly and is adapted to receive an input intelligence call routing script and to send the script to the second unit 302.

In another embodiment, one or more basic function components can be arranged in one or more third units 303. The basic function component can implement a routing flow separately or in combination with other components. The third unit 303 and the second unit 302 are connected directly or indirectly. As required to execute a routing script, the second unit 302 can access the third unit 303 and invoke a required basic function component arranged in the third unit 303.

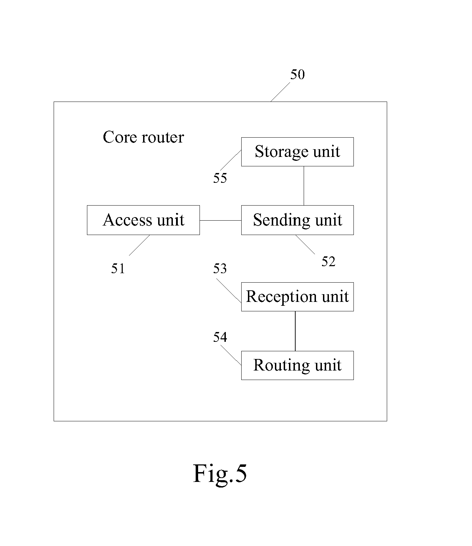

Referring to Figure 5, it illustrates a core server according to an embodiment of the invention.

The core server 50 includes an access unit 51, a sending unit 52, a reception unit 53, a routing unit 54 and a storage unit 55, where the access unit 51 is adapted to enable an access of a call, the sending unit 52 is adapted to send information of the call to an intelligence call routing device, the reception unit 53 is adapted to receive routing information, which is obtained by the intelligence call routing device in accordance with a pre-configured routing script corresponding to the information of the call, returned from the intelligence call routing device, the routing unit 54 is adapted to route the call to a destination device in accordance with the routing information, and the storage unit 55 is adapted to store information on whether intelligence routing is required for an access code. In accordance with the information stored in the storage unit 55 and the access code of the call, the sending unit 52 sends the information of the call to the intelligence call routing device when intelligence routing is required for the access code of the call.

An embodiment of the invention further provides correspondingly a network device for enabling setting, including a component adapted to configure an intelligence call routing script corresponding to an access code.

A component is adapted to configure a corresponding relationship between an intelligence call routing device and the intelligence call routing script.

A component is adapted to configure a core server with whether intelligence routing is required for the access code.

The above embodiments are merely illustrative but not limitative of the technical solutions of the embodiments of the invention. Although the embodiments of the invention have been detailed with reference to the above preferred embodiments, those ordinarily skilled in the art shall appreciate that the technical solutions of the embodiments of the invention can be modified or adapted without departing from the scope of the invention as defined in the appended claims.

## Claims

1. A routing method, comprising:
enabling an access of a call and sending information of the call to an intelligence call routing device;
receiving routing information returned by the intelligence call routing device, wherein the routing information is obtained by the intelligence call routing device in accordance with a pre-configured routing script corresponding to the information of the call; and
routing the call to a destination device in accordance with the routing information.

2. The method according to claim 1, wherein the sending of the information of the call to the intelligence call routing device comprises:
obtaining an access code of the call;
determining whether intelligence routing is required for the access code in accordance with configuration information on whether intelligence routing is required for the access code; and
sending the information of the call to the intelligence call routing device if intelligence routing is required.

3. A routing method, comprising:
receiving information of a call, which is obtained by a core server from an analysis of an access code of the call, sent from the core server;
obtaining routing information in accordance with a configured routing script corresponding to the information of the call; and
sending the routing information to the core server.

4. The method according to claim 1, wherein the obtaining of the routing information in accordance with the configured routing script corresponding to the information of the call comprises:
generating an intelligence routing flow by compiling the routing script;
loading the intelligence routing flow; and
obtaining the routing information by executing the intelligence routing flow.

5. A routing method, comprising:
enabling, by a core server, an access of a call and sending information of the call to an intelligence call routing device;
obtaining, by the intelligence call routing device, routing information in accordance with a configured routing script corresponding to the information of the call;
returning, by the intelligence call routing device, the routing information to the core server; and
routing, by the core server, the call to a destination device in accordance with the routing information.

6. The method according to claim 5, wherein the obtaining by the intelligence call routing device of the routing information in accordance with the configured routing script corresponding to the information of the call comprises:
generating an intelligence routing flow by compiling the routing script;
loading the intelligence routing flow; and
obtaining the routing information by executing the intelligence routing flow.

7. The method according to claim 5, wherein the sending by the core server of the information of the call to the intelligence call routing device comprises:
obtaining, by the core server, an access code of the call;
determining whether intelligence routing is required for the access code in accordance with configuration information on whether intelligence routing is required for the access code; and
sending the information of the call to the intelligence call routing device if intelligence routing is required.

8. A routing device, comprising:
a first unit, adapted to interact with a core server of a call center; and
a second unit, adapted to obtain routing information in accordance with information of a call received by the first unit and to send the routing information to the core server through the first unit.

9. The routing device according to claim 8, wherein the second unit comprises:
a component adapted to generate an intelligence routing flow by compiling the routing script;
a component adapted to load the intelligence routing flow; and
a component adapted to obtain the routing information by executing the intelligence routing flow.

10. The routing device according to claim 8 or 9, further comprising a database server adapted to store basic routing information and to provide the second unit with the basic routing information.

11. The routing device according to claim 8 or 9, further comprising:
an intelligence call routing script input means connected with the first unit or the second unit, adapted to receive an input intelligence call routing script and to send the intelligence call routing script to the second unit.

12. The intelligence call routing device according to claim 8 or 9, further comprising:
a third unit adapted to interact with the first unit or the second unit and to provide the second unit with a basic function component required to execute the routing script.

13. A core server, comprising:
an access unit, adapted to enable an access of a call;
a sending unit, adapted to send information of the call to an intelligence call routing device;
a reception unit, adapted to receive routing information, which is obtained by the intelligence call routing device in accordance with a pre-configured routing script corresponding to the information of the call, returned from the intelligence call routing device; and
a routing unit adapted, to route the call to a destination device in accordance with the routing information.

14. The core server according to claim 13, further comprising:
a storage unit, adapted to store information on whether intelligence routing is required for an access code; wherein,
the sending unit sends the information of the call to the intelligence call routing device in accordance with the information stored in the storage unit and the access code of the call.

15. A routing system, comprising a core server and at least one intelligence call routing device; wherein,
the core server is adapted to enable an access of a call, to send information of the call to the intelligence call routing device, and to route the call to a destination device in accordance with routing information returned from the intelligence call routing device; and
the at least one intelligence call routing device is adapted to obtain the routing information in accordance with a routing script corresponding to the information of the call and to send the routing information to the core server.

16. The routing system according to claim 15, further comprising:
a configuration device adapted to configure the core server and the at least one intelligence call routing device by configuring the number of the at least one intelligence call routing device, whether routing and a corresponding intelligence call routing device is required for an access code, and an intelligence routing flow required to be loaded for the corresponding intelligence call routing device.

17. A network device, comprising:
a component adapted to configure an intelligence call routing script corresponding to an access code;
a component adapted to configure a corresponding relationship between an intelligence call routing device and the intelligence call routing script; and
a component adapted to configure a core server with whether intelligence routing is required for the access code.
